# EUROPÄISCHE PATENTSCHRIFT

(11) **EP 0 442 457 B1**
(45) Veröffentlichungstag und Bekanntmachung des Hinweises auf die Patenterteilung: **19.07.1995**
(21) Anmeldenummer: 91101984.2
(22) Anmeldetag: 13.02.1991
(51) Int. Cl.: F16L 9/12, F16L 58/10

(54) **Wärmeformbeständige Rohre oder Liner**
Heat resistant pipe or liner
Tuyau ou revêtement résistant à la chaleur

(30) Priorität: 13.02.1990 DE 4004360
(43) Veröffentlichungstag der Anmeldung: 21.08.1991
(73) Patentinhaber: Knappe, Holger, D-23845 Grabau (DE)
(72) Erfinder: Knappe, Holger, D-23845 Grabau (DE)
(74) Vertreter: Siewers, Gescha, Dr.

(56) Entgegenhaltungen:
- DE-A- 2 603 765
- DE-U- 8 515 454
- FR-A- 2 587 083
- FR-A- 2 592 655
- FR-A- 2 619 887

## Beschreibung

Die Erfindung betrifft wärmeformbeständige Rohre oder Liner, wobei die Liner insbesondere als Innenauskleidung für Schornsteine eingesetzt werden können.

Als Schornsteine bezeichnet man röhrenförmige, senkrechte Bauwerke aus Mauerwerk, Stahlbeton oder Stahl, in denen durch den Einschluß einer heißen Gassäule ein Zug verursacht wird. Im Schornsteinbau werden entweder Ziegel, und zwar vorzugsweise Ziegel mit Löchern verwendet, da ihre Lufträume als Warmeisolation wirken und sie leichter sind als Vollziegel. Niedrige Schornsteine, auch für Industriebetriebe, werden häufig aus Stahlblech gebaut. Industrieschornsteine großer Höhe bestehen aus einem Schaft, wofür sich Stahlbeton als Baustoff bewährt hat. Höhere Schornsteine aus Mauerwerk müssen genügend Querschnittsfläche aufweisen, um das darüberliegende Gewicht ausreichend verteilen zu können, so daß die zulässige Druckbeanspruchung der Ziegel nicht überschritten wird. Auf der anderen Seite müssen aber Schornsteine für Wohnhäuser ebenso wie Industrieschornsteine für einen zufriendenstellenden Betrieb genügend hoch sein, um den benötigten Zug zu erzeugen und genügend groß, um die entstehenden Abgase abführen zu können. Sämtliche Schornsteine, ob aus Ziegelwerk, Stahlbeton oder Stahlblechen müssen mindestens zu einem Teil der Bauhöhe mit feuerfesten Stoffen, insbesondere feuerfester Keramik, ausgekleidet sein, da ansonsten die Bestandteile des Rauchgases in sehr kurzer Zeit Ziegelwerk, Stahl oder Stahlbeton angreifen und korrodieren würden. Da außerdem das Innenfutter den relativ hohen Temperaturen des Rauchgases von etwa 160° oder höher entsprechen muß, wird vorzugsweise keramisches Material eingesetzt. Seit kurzem ist auch versucht worden, das relativ schwere keramische Material durch Kunststoffutter zu ersetzen, da sich dadurch auch eine beträchtliche Gewichtsersparnis und somit eine Reduzierung der Querschnittsfläche erzielen läßt. Kunststoffe als Innenfutter von Schornsteinen haben aber recht unterschiedliche Resultate erbracht und sich bei weitem noch nicht durchsetzen können, was hauptsächlich an Korrosionserscheinungen durch die Rauchgase und an der mangelnden Temperaturbeständigkeit der Kunststoffe liegt. Es besteht daher immer noch ein Bedürfnis danach, geeignete Innenliner für Schornsteine aus Kunststoff zu entwickeln, die für den Dauerbetrieb geeignet sind und die gewünschte Gewichtsersparnis ermöglichen.

Ähnliche Probleme wie für die Innenliner von Schornsteinen ergeben sich beispielsweise bei den Auskleidungen von Rohren, die als Gas- oder Flüssigkeitsleitung im höheren Temperaturbereich eingesetzt werden, wie beispielsweise Versorgungsleitungen für Heißwasserradiatoren, Auskleidungen der Zug- bzw. Abführungen von Exhaustoren, Zuleitungen zu Solarheizungen usw. Auch in diesen Fällen sind die transportierten Wässer oder Gase relativ aggressiv und aufgrund der erhöhten Temperatur ist nicht nur mit Korrosionserscheinungen, sondern auch mit Hydrolyse der Kunststoffe zu rechnen. Außerdem spielt bei diesen Leitungen auch die mögliche Gewichtsersparnis durch die Verwendung von Kunststoffen eine ganz wesentliche Rolle, da bisher für diese Zwecke häufig Metallrohre oder Auskleidungen, beispielsweise Kupferrohre eingesetzt werden.

Aus DE-A-2603765 sind Compositrohre bekannt, die aus einer thermoplastischen Innenschicht und einer Ummantelung aus einem glasfaserverstärktem Thermoplasten bestehen.

Erfindungsgemäß werden nunmehr wärmeformbeständige Rohre oder Liner vorgeschlagen, die die Merkmale von Anspruch 1 aufweisen.

Überraschenderweise wurde festgestellt, daß man durch die erfindungsgemäße Kombination Rohre oder Liner herstellen kann, die sämtlichen Anforderungen in bezug auf Stabilität, Beständigkeit und Temperaturverhalten erfüllen. Die Gewichtsersparnis bei Verwendung solcher Kunststoffrohre oder -liner anstelle von keramischen Auskleidungen oder Metallrohren oder -auskleidungen ist bedeutend und erhöht die Stabilität bzw. läßt einen geringeren Querschnittsdurchmesser zu.

Als ungesättigte Polyesterharze, im folgenden als UP-Harze abgekürzt, bezeichnet man die Reaktionsprodukte aus mehrbasischen ungesättigten Carbonsäuren wie Maleinsäure, Furmarsäure, Itakonsäure oder deren Anhydride, Phthalsäure und anderen ungesättigten Säuren mit gesättigten zweiwertigen Alkoholen wie beispielsweise Ethylenglykol, Propan- und Butandiole, Zyklohexandimethanol oder auch Neopentylglykol. Bei der Umsetzung erhält man Harze mit einem Molekulargewicht von etwa 2.000 bis 5.000, die in der Regel sofort in zur Vernetzung geeigneten Monomeren gelöst werden. Diese Lösungsmittel, die durch Addition an zwei Doppelbindungen überbrückend wirken können, sind vor allen Dingen Styrol, Metylstyrol, diverse Allylester, PMMA-Ester, Triallylzyanurat usw. Die Vernetzung tritt beim Erwärmen und/oder unter Einfluß von Peroxidkatalysatoren unter Mitwirkung von Beschleunigern, wie beispielsweise Amin- oder Schwermetallsalzen ein. Gegebenenfalls kann die Härtung auch durch Einwirkung von ionisierender Strahlung oder von UV-Strahlung bei Gegenwart von Sensibilatoren erfolgen. Diese UP-Harze werden bei der Herstellung der Innenliner in glasfaserverstärkter Form eingesetzt, wobei der Anteil von Glasfasern vorzugseise in einem Bereich von etwa 10 bis 60 Gew.% der Gesamtmasse liegen kann.

PPO entsteht durch Polykondensation von methylsubstituierten oder unsubstituierten Phenolen, deren Molekulargewicht bei etwa 25.000 bis 30.000 liegt. Diese Polymeren sind in der Regel nur wenig verzweigt. Trotz der an und für sich guten physikalischen und chemischen Eigenschaft ist bei dem Homopolykondensat nachteilig, daß sich vor allen bei hohen Temperaturen bei 100 °C ein starker oxidativer Abbau zeigt. In der Regel wird daher heute modifiziertes PPO, sogenannte "plastic alloys" verarbeitet, die in der Wärme formbeständiger und weniger oxidativ empfindlich sind. Hervorzuheben ist eine überraschende Beständigkeit gegen einen Großteil der üblichen Chemikalien. Zur Modifizierung von PPO kann Polystyrol eingesetzt werden, aber auch andere Kunststoffe sind in diesen "plastic alloys" einarbeitbar. Aus polyamide können sowohl die Polykondensate aus ε - Caprolactam, Aminoundekansäure oder Laurinlaktam oder auch die Kondensate aus Hexanmethylendiamin und Adipinsäure oder Hexamethylendiamin und Sebazinsäure Verwendung finden. Gemeinsam ist den Polyamiden regelmäßig die hohe Festigkeit, Steifheit und Härte, hohe Formbeständigkeit in der Wärme, hohe Chemikalienbeständigkeit und ebenfalls die wirtschaftliche Verarbeitbarkeit.

Die PA modifizierten Polyphenylenoxide sind sogenannte blends oder plastic alloys und zeichnen sich durch eine hohe Wärmeformbeständigkeit unter Belastung aus, die je nach Gehalt an Polyamid zwischen etwa 170 bis 200°C schwanken kann. Die Chemikalienbeständigkeit ist ebenfalls hervorragend, so daß die in dieser Weise modifizierten PPO Mischungen ohne weiteres als Innenliner von Schornsteinen eingesetzt werden können, da sie den Belastungen durch die sauren Rauchgase standhalten. Ein weiterer Vorzug dieser modifizierten Polymere liegt in der Tatsache, daß der sogenannte Formschrumpf oder der lineare Wärmeausdehnungskoeffizient relativ klein ist und sich im Bereich zwischen etwa 3,0 bis 3,7, bestimmt nach VDE 0304 bewegt. Dadurch wird die Gefahr von Spannungsrißbildungen zwischem dem Mantel aus ungesättigten polyestern und dem Innenliner deutlich verringert.

PA modifizierte PPO's sind beispielsweise von der Firma Asahi Chemical Company im Handel.

Anstelle der modifizierten PPO - Kunststoffe können auch andere Thermoplasten eingesetzt werden, die den Anforderungen hinsichtlich Wärmeformbeständigkeit und Wärmeausdehnungskoeffizient genügen; hierzu gehören beispielsweise Polyvinylidenfluored-Polymere, abgekürzt PVDF. Hierbei handelt es sich um hochmolekulare Homopolymerisate, deren Monomere aus Trichlorethylen durch Umsetzung mit Flußsäure und Einwirkung von metallischen Zink auf das dabei gebildete Tifluordichlorethan hergestellt werden können. Die Kunststoffe verfügen über mechanische Festigkeit und Zähigkeit sowie hohe Temperaturbeständigkeit und weisen ebenfalls eine hervorragende Chemikalienbeständigkeit auf. Die Kristallitschmelztemperatur beträgt etwa 170°C und auch der Wärmeausdehnungskoeffizient bewegt sich im Bereich um etwa 3,0, bestimmt nach VDE 0304.

Die Herstellung dieser wärmeformbeständigen Rohre oder Liner kann entweder in der Weise erfolgen, daß beispielsweise dünnwandige Rohre aus modifizierten PPO mit Glasfaserrovings flächendeckend belegt werden, wobei die Fäden bereits mit einem Thermoplasten wie PPO durchtränkt sind. Bei Belegen wird das Rohr mit Innendruck beaufschlagt, wobei gleichzeitig der mit Fasern umhüllte Bereich so weit aufgeheizt wird, daß der innere Thermoplast aufschmilzt und sich vorzugsweise zumindest teilweise mit dem Mantelmaterial verbindet. Es ist aber auch möglich, beispielsweise mit den Thermoplasten durchtränkte Rovings oder Bänder flächendeckend auf einen Dorn aufzubringen, dann aufzuheizen und anschließend wieder unter die Erweichungstemperatur abzukühlen, so daß der steife Glas-Kunststoffkomposit dann abgezogen werden kann. Vorzugsweise wird bei der Herstellung aber das Rohr mit Polyestern getränkten Glasfasern belegt, wobei die Aushärtung in üblicher Weise durch Erwärmen bzw. Bestrahlung mit aktinischem Licht erfolgt. Auch dabei tritt zumindest eine punktuelle Verschweißung zwischen den Kunststoffen des Innenliners und des Mantels ein.

Vorzugsweise wird als Liner oder Matrix ein PA-modifiziertes PPO mit einer Wärmeformbeständigkeit nach ASTM D 648 von 170°C oder mehr und einem linearen Wärmeausdehnungskoeffizienten von etwa 3,0 eingesetzt. Die der mechanischen Stabilität dienenden ungesättigten Polyesterharze können die üblicherweise verwendeten Typen sein, wenn die Glasübergangstemperatur nicht weniger als 10°C unter der maximalen Gebrauchstemperatur beträgt. Derartige Polyester werden beispielsweise von der Firma Bayer unter der Marke "Dekovar", von der BASF unter "Palatal" und von der Firma Hüls unter der Marke "Vestopal" vertrieben. An Stelle ungesättigter Polyester können auch andere Duroplasten, wie beispielsweise GF-verstärkte Epoxidharze eingesetzt werden.

Die Erfindung wird im folgenden anhand der Beispiele näher erläutert:

### Beispiel 1

Dünnwandige Rohre aus PA-modifizierten PPO mit einem Durchmesser von 110 mm bei einer Wandstärke von 1 mm werden mit einem Bündel Glasfaserrovings flächendeckend belegt. Dabei wird das Rohr mit Innendruck beaufschlagt, um ein Kollabieren zu verhindern. Die zum Belegen eingesetzten Glasfasern sind bereits entweder mit einem Thermoplasten wie PPO oder einem ungesättigten Polyesterharz durchtränkt. Gleichzeitig wird der bereits mit Fasern umhüllte Bereich des Rovings so aufgeheizt, daß bei Verwendung von Thermoplasten dieser aufschmilzt und sich vorzugsweise vollständig oder zumindest punktuell mit dem Rohrmaterial verbindet.

Bei Verwendung von ungesättigten Polyestern erfolgt die Aushärtung in an sich bekannter Weise durch Wärmeeinwirkung oder Bestrahlung.

### Beispiel 2

Mit PA-modifizierten PPO durchtränkte Rovings oder Bänder werden auf einem Dorn flächendeckend aufgebracht. Anschließend wird der Thermoplast aufgeschmolzen und dann wieder unter die Erweichungstemperatur abgekühlt, so daß sich abschließend der steife Kompositkunststoff vom Dorn abziehen läßt.

## Patentansprüche

1. Wärmeformbeständige Rohre oder Liner mit einer inneren, im wesentlichen einstückig geschlossenen Schicht aus einem Thermoplasten mit einer Wärmeformbeständigkeit nach ASTM D 648 von 170°C oder höher und einem linearen Wärmeausdehnungskoeffizienten nach VDE 0304 im Bereich von etwa 3,0 bis 3,7 in zumindest punktueller Verschweißung mit einerm Mantel aus glasfaserverstärkten Thermoplasten oder ungesättigten Duroplasten.

2. Wärmeformbeständige Rohre oder Liner nach Anspruch 1, gekennzeichnet durch eine im wesentlichen einstückig geschlossene Innenschicht aus geschmolzenen und wieder erstarrten Thermoplasten.

3. Rohre oder Liner nach Anspruch 1 oder 2, gekennzeichnet durch die Verwendung von Styrol- oder PA-modifizierte PPO als Innenschicht und/oder Mantel.

4. Rohre oder Liner nach Anspruch 1 oder 2, gekennzeichnet durch die Verwendung von PVDF als Innenschicht und/oder Mantel.

## Claims

1. Heat resistant pipe or liner with an essentially closed one-piece inner layer, consisting of a thermoplastic material with a heat distortion temperature according to ASTM D 648 of 170°C or above and a linear thermal dilatation coefficient according to VDE 0304 in the region of about 3.0 to 3.7 and at least point-welded to a casing consisting of glass-fibre reinforced thermoplastic material or unsaturated duroplastic material.

2. Heat resistant pipe or liner according claim 1, characterized by an essentially closed one-piece inner layer, consisting of liquefied and resolidified thermoplastic material.

3. Heat resistant pipe or liner according to claim 1 or 2, characterized by the use of styrole- or PA-modified PPO as inner layer or casing.

4. Heat resistant pipe or liner according to claim 1 or 2, characterized by the use of PVDF as inner layer or casing.

## Revendications

1. Tuyau ou revêtement résistant à la chaleur avec une couche interne essentiellement fermée et fabriquée d'une pièce, consistant d'une matière thermoplastique avec une température de déformation thermique selon ASTM D 648 de 170°C ou plus et un coefficient de dilatation thermique linéaire selon VDE 0304 dans le domaine d'environ 3.0 à 3.7 et soudé au moins ponctuellement à une enveloppe consistant de matière thermoplastique renforcée de fibre de verre ou de matière duroplastique non-saturée.

2. Tuyau ou revêtement résistant à la chaleur selon revendication 1, caracterisé par une couche interne essentiellement fermée et fabriquée d'une pièce, se constituant de matière thermoplastique liquéfiée et resolidifiée.

3. Tuyau ou revêtement résistant à la chaleur selon revendication 1 ou 2, caracterisé par l'utilisation de PPO modifié de styrole ou de PA pour la couche interne et/ou l'enveloppe.

4. Tuyau ou revêtement résistant à la chaleur selon revendication 1 ou 2, caracterisé par l'utilisation de PVDF pour la couche interne et/ou l'enveloppe.
